# EUROPEAN PATENT SPECIFICATION

(11) **EP 2 435 620 B1**
(45) Date of publication and mention of the grant of the patent: **13.08.2014**
(21) Application number: 10780820.6
(22) Date of filing: 28.05.2010
(51) Int. Cl.: D06F 37/22

(54) **LAUNDRY MACHINE**
WASCHMASCHINE
MACHINE A LAVER

(30) Priority: 28.05.2009 KR 20090047192; 27.08.2009 KR 20090079950; 24.05.2010 KR 20100047877
(43) Date of publication of application: 04.04.2012
(73) Proprietor: LG Electronics Inc., Seoul 150-721 (KR)
(72) Inventor: KWON, Ig Geun, Changwon-si Gyeongnam 641-110 (KR); KIM, Young Suk, Seoul 153-802 (KR); SEO, Hyun Seok, Seoul 153-802 (KR); JO, Min Gyu, Seoul 153-802 (KR)
(74) Representative: Urner, Peter
(86) International application number: PCT/KR2010/003405
(87) International publication number: WO 2010/137909

(56) References cited:
- EP-A1- 1 840 257
- EP-A1- 1 881 099
- EP-A1- 1 881 099
- EP-A2- 1 770 199
- US-A1- 2007 289 339
- US-B1- 6 557 383

## Description

### Technical Field

The present invention relates to a laundry machine.

Generally, laundry machines are categorized into washers and dryers. Such washers include pulsator type washing machines and drum type washing machines and washing machines having washing and drying functions. In general, dryers are appliances for drying wet laundry using hot air and the like.

### Background Art

Such a drum type washing machine includes a tub arranged horizontally therein and a drum arranged in the tub horizontally. Laundry such as clothes is put into the drum and tumbled by the drum being rotated.

The drum is rotatably located in the tub.

A shaft is connected to the drum and a motor is connected to the shaft directly or indirectly by a belt. As a result, when the motor is rotated, the drum is rotated.

The drum is rotated during rinsing and drying-spinning cycles as well as a washing cycle. The drum vibrates while rotating.

In conventional laundry machines, the shaft passes through the tub. The bearing housing is provided to rotatably support the shaft. The bearing housing is insert-molded with the tub or attached to a rear wall thereof.

The above bearing housing supports the shaft and the vibration of the drum is transmitted to the tub and the bearing housing via the shaft.

Because of that, the tub vibrates together with the drum and a damping supporting material is connected to the tub to reduce the vibration.

That is, the conventional laundry machine is structured to make the vibration of the drum transmitted to the tub directly as and to make the damping supporting material support connected to the support the vibration.

US 6,557,383 B1 discloses a drum type washing machine including an outer cabinet, a water tub elastically supported on suspension in the outer cabinet, and a rotating tub mounted for rotation in the water tub. A loading element loads the suspension and has a center of gravity located between substantially the middle of the dimension from the front to the rear of the rotating tub and the rear of the rotating tub.

EP 1 881 099 Al discloses a drum type washing machine wherein while a damper elastically supports, from below, the center of gravity of a water tub, a suspender also elastically supports it, from above, by suspending a front part of the water tub rearward-upward and a rear part thereof frontward-upward. Even when a rated capacity of laundry is put into a drum, although the damper simply elastically supports the center of gravity of the structural load from below, the water tub is prevented from sinking too far.

US 2007/0289339 A1 discloses a mechanical apparatus for washing/drying, wherein a structure for damping and absorbing vibration of a tub in a washer or dryer is provided. The apparatus includes a tub, a drum rotatably provided within the tub, a spring provided to elastically support the tub, and a damping means having one end rotatably connected to the tub by a hinge assembly and the other end connected to a shock-absorbing member fixed to a cabinet.

### Disclosure of Invention

### Technical Problem

The object is solved by the features of the independent claim.

Preferably, the present invention provides a laundry machine in which a structure of a suspension assembly which supportably buffers vibration of a drum is completely different from a related art structure.

### Solution to Problem

In the laundry machine in accordance with a preferred embodiment of the present invention, the suspension assembly which buffers the vibration of the drum can include at least three suspensions arranged on a triangle.

The three suspensions may be arranged to surround a center of gravity of the drum and the driving unit. In this instance, two of the three suspensions may be positioned on a front side of the center of gravity, and a rest one may be positioned on a rear side of the center of gravity.

The suspension positioned on the rear side may have spring constant different from spring constant of the suspensions positioned on the front side.

Moreover, the suspension positioned on the rear side may have initial compression translocation greater than the initial compression translocation of the suspensions positioned on the front side. The initial compression translocation is compressive translocation of the suspension caused by gravity of the drum and the driving unit in a state no laundry is introduced to the drum.

In the meantime, the three suspensions can support the assembly including the drum and the driving unit to stand on by itself. It means that the assembly including the drum and the driving unit can be maintained a mounted state without depending on other additional supporting means.

The laundry machine of the present invention may include a suspension assembly connected to the driving unit for supportably buffering vibration of the drum. Though, in the related art, the suspension assembly is connected to the tub for buffering both the tub and the drum, the laundry machine of the present invention may have a structure in which vibration of the drum is isolated from the vibration of the tub. In the meantime, the tub is supported rigidly more than the drum being supported by the suspension assembly.

An example in which the tub is supported rigidly more than the drum being supported by the suspension assembly is as follows.

First, at least a portion of the tub can be formed as one unit with the cabinet. Second, the tub may be supportably connected with screws, rivets, rubber bushings or supportably fixed by welding, adhesive sealing. In this case, such a connection member has rigidity greater than the suspension assembly with respect to a direction of a major vibration of the drum.

Moreover, a flexible member may be included for reducing transmission of vibration from the drum to the tub. The flexible member may be made to make flexible connection of the tub to the driving unit for preventing leakage from the driving unit and the tub and enabling the driving unit to move relative to the tub. Such a flexible member may be the rear gasket.

The foregoing embodiments can be combined in various forms as far as the embodiments are not contradictory to one another, to produce another embodiment.

### Advantageous Effects of Invention

The present invention suggests a new structure of the suspension assembly for reducing vibration of the vibration system including the drum.

Particularly, by providing two suspensions on the front side of the center of gravity of the vibration system and one suspension on the rear side of the center of gravity of the vibration system, making the suspensions to be positioned on a triangle, the vibration system can be supported securely and the significant shaking of the front side of the vibration system can be reduced.

### Brief Description of Drawings

The accompanying drawings, which are included to provide further understanding of the disclosure and are incorporated in and constitute a part of this application, illustrate embodiments of the disclosure and together with the description serve to explain the principle of the disclosure.

In the drawings:
FIG 1 illustrates an exploded perspective view of a laundry machine in accordance with a preferred embodiment of the present invention.
FIGs. 2 and 3 illustrate perspective views each showing a tub, a tub back and a rear gasket assembled together.

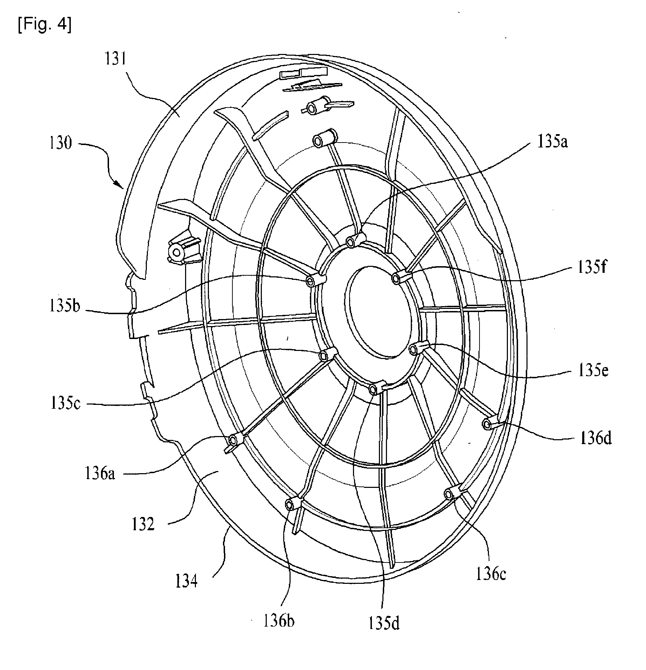

FIG 4 shows a tub back.
FIGs 5 and 6 show a bearing housing.
FIG 7 shows a weight bracket or radially extended bracket.
FIG. 8 illustrates a perspective view of a suspension assembly mounted to a base.
FIGs. 9 to 12 show a axially extended bracket.
FIG. 13 shows how a suspension or a (spring) damper is mounted.
FIG 14 shows a charateristic of a vibration of an embodiment of the present invention.

### Mode for the Invention

Reference will now be made in detail to the specific embodiments of the present invention, examples of which are illustrated in the accompanying drawings. Wherever possible, the same reference numbers will be used throughout the drawings to refer to the same or like parts.

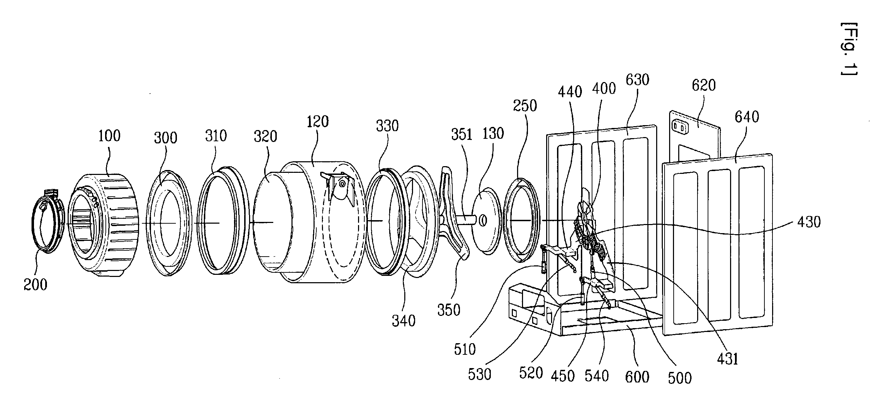

FIG 1 illustrates an exploded perspective view of a laundry machine in accordance with a preferred embodiment of the present invention.

The laundry machine has a tub fixedly supported on a cabinet. The tub includes a tub front 100 which is a front portion thereof and a tub rear 120 which is a rear portion thereof. The tub front 100 and the tub rear 120 are coupled with screws, to form a space for housing the drum therein. The tub rear 120 has an opening in a rear surface thereof. The tub rear 120 has an inside circumference of the opening in the rear surface connected to an outside circumference of a rear gasket 250. The rear gasket 250 has an inside circumference connected to a tub back 130. The tub back 130 has a pass through hole in a center thereof through which a rotational shaft passes. The rear gasket 250 is formed of a flexible material such that vibration does not transmit from the tub back 130 to the tub rear 120.

The rear gasket 250 is sealably connected to the tub back 130 and tub rear 120 respectively for preventing water from leaking from the tub. The tub back 130 vibrates together with the drum when the drum rotates, when the tub rear 120 is spaced from the tub back 130 adequately such that the tub back 130 does not interfere with the tub rear 120. The rear gasket 250 is formed of a flexible material, enabling the tub back 130 to make relative movement without interference with the tub rear 120. The rear gasket 250 has a corrugated portion which can be elongated enough to allow such relative movement of the tub back 130.

There is a foreign matter seizure preventive member 200 on a front side of the tub front 100 for preventing foreign matters from infiltrating into a space between the tub and the drum. The foreign matter seizure preventive member 200 is formed of a flexible material, and secured to the tub front 100. The foreign matter seizure preventive member 200 may be formed of a material the same with the rear gasket 250.

The drum has a drum front 300, a drum center 320, a drum back 340 and so on. There can be ball balancers mounted to a front and a rear of the drum, respectively. The drum back 340 is connected to a spider 350, and the spider 350 is connected to a rotational shaft 351. The drum is rotated within the tub by rotation force transmitted thereto through the rotational shaft 351.

The rotational shaft 351 is passed through the tub back 130 and connected to the motor, in a direct manner. In detail, a rotor of the motor (not shown) is connected to the rotational shaft, directly. A bearing housing 400 is coupled to a rear of the tub back 130. The bearing housing 400 rotatably supports the rotational shaft 351 between the motor and the tub back 130.

A stator 80 of the motor is fixedly mounted to the bearing housing 400. The rotor is positioned to surround the stator 80. The motor, being an outer rotor type, is connected to the rotational shaft, directly.

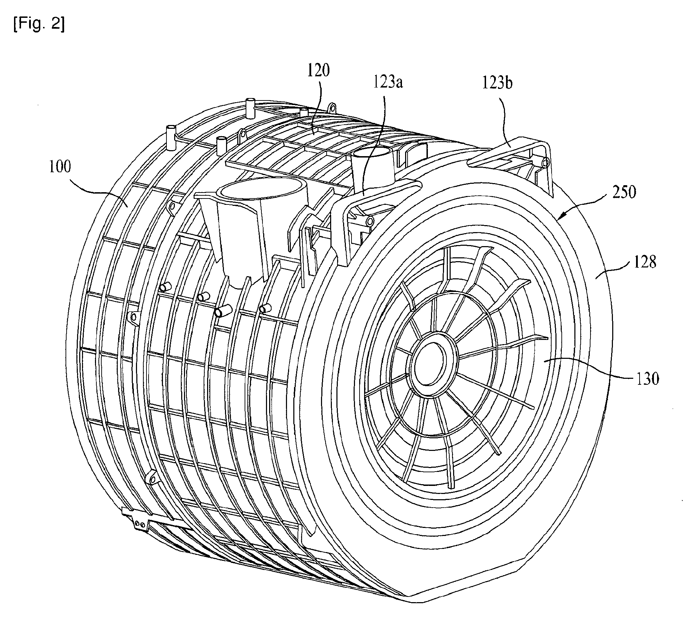

FIG. 2 illustrates a perspective view of the tub front 100, the tub rear 120, the tub back 130 and the rear gasket 250 assembled together.

As described before, the tub front 100 is fixedly connected to the cabinet front. To make such a fixed connection available, four fastening bosses are formed around the laundry opening on a front thereof, substantially. After positioning the cabinet front in a state the tub front 100 is mounted, screws are fastened from a front side to a rear side to fasten the cabinet front.

Under the tub front 100, there is a base coupling portion for seating the tub front 100 to the base 600. The base coupling portion includes one pair of hollow cylindrical grooves.

The tub rear 120 is cylindrical to surround the drum, with a front opening as it is, and a rear having a donut shaped rear surface 128. The front side is sealably coupled to the tub front 100. The rear surface 128 of the tub rear 120 has a diameter greater than an outside diameter of the tub back 130, adequately. There is a gap that does not interfere with the rear surface 128 of the tub rear 120 even if the tub back 130 vibrates. In the gap, i.e., between the rear surface 128 of the tub rear 120 and the tub back 130, the rear gasket 250 is connected. The rear gasket 250 seals a space between the rear surface 128 of the tub rear 120 and the tub back 130. The rear gasket 250 may have an adequately flexible corrugated portion so as not to transmit the vibration from the tub back 130 to the tub rear 120.

The tub rear 120 has a coupling portion 123 for coupling to the cabinet rear 620. And, the tub rear 120 also has one pair of grooves for seating on and coupling to the base 600.

The tub can made to seat and to stand on the base 600 by itself in a state as shown in FIG. 2.

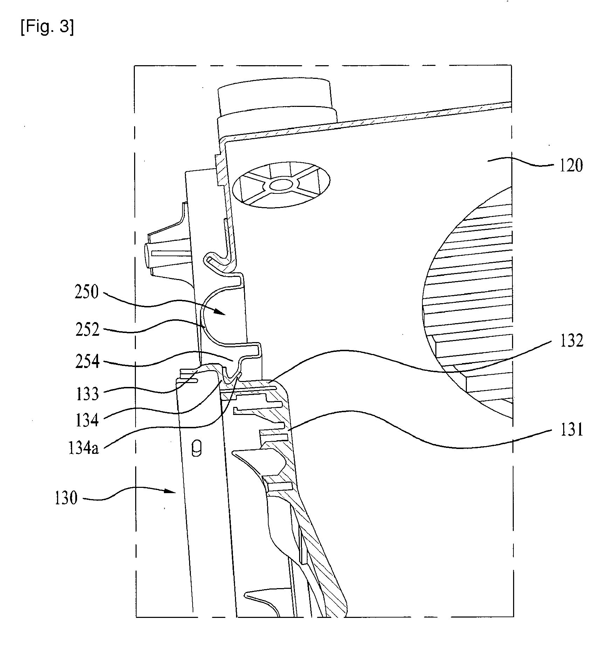

FIG. 3 illustrates a partial section of an assembly of the tub rear 120, the tub back 130, the rear gasket 250.

There is a rear gasket coupling portion formed as an inside circumference of the rear surface 128 of the tub rear 120 is extended bent backward and outward radially.

The rear gasket coupling portion has fastening rings positioned around a grooved portion for securing the rear gasket 250 to the tub rear 120.

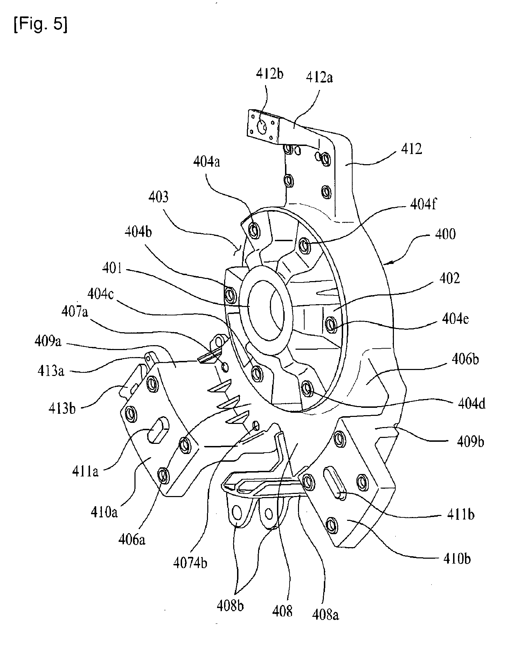

Referring to FIG. 5, the tub back 130 includes a center portion 131 projected forward slightly, and a rim portion 132 extended backward from the center portion 131. The tub back 130 also includes a seating portion 134 which is a radial extension from the rim portion 132. The rim portion 134 has a lip 134a formed on an outside surface, to form a groove between the lip 134 and the seating portion 134, in which the rear gasket 250 is coupled. The rear gasket 250 has a groove 254 for placing in the groove. As the fastening ring is positioned in the groove 254, the rear gasket 250 is fastened to the lip portion 101.

And, the tub back 130 has a water wall 133 formed on an upper side for preventing water from dropping to the motor. The water wall 133 is a backward extension from the seating portion 134.

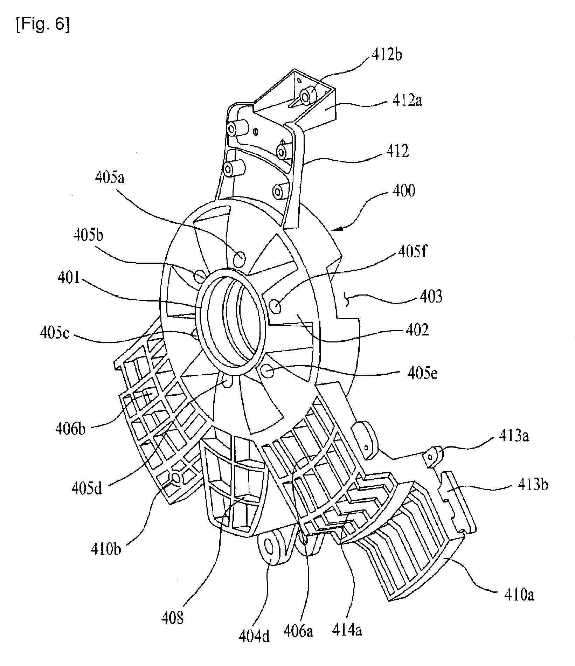

At a center of the center portion 131 of the tub back 130, there is a pass through hole 131c formed therein for the rotational shaft to pass therethrough. The pass through hole 131c is formed at a bearing supporting portion seating portion having the bearing supporting portion 401 of the bearing housing 400 shown in FIG. 6 seated thereon. A front of the bearing supporting portion 401 seats on an outside surface, i.e., a rear surface, of the bearing supporting portion seating portion. The bearing supporting portion seating portion has a front extension to form a cylindrical flange. The flange is positioned at and placed in a groove fonned in the spider 350.

The bearing housing 400 has a stator fastening portion 402 for fastening the stator of the motor thereto. The tub back 130 has six fastening bosses 135 for fastening to the stator fastening portion 402. The tub back 130 has a fastening boss 136 on an outer side for fastening to the first extension 406a and the second extension 406b from the bearing housing 400.

FIGS. 5 and 6 illustrate the bearing housing 400 respectively, wherein FIG. 5 illustrates a rear side of the bearing housing 400 and FIG. 6 illustrates a front side of the bearing housing 400. As described before, the bearing housing 400 has the bearing supporting portion 401 for supporting the bearing, and the stator fastening portion 402 which is a radial extension from the bearing housing 400.

The stator fastening portion 402 has one side having a hole sensor mounting slot 403 formed therein for housing a hole sensor 81 for the stator.

There are a first extension 406a and a second extension 406b extended on left/iight sides in a radial from the stator fastening portion 402. The first extension 406a and the second extension 406b are connected to a first vertical portion 409a and a second vertical portion 409b which are backward vertical extensions from the first extension 406a and the second extension 406b, respectively. There are a first weight fastening portion 410a and a second weight fastening portion 410b which are extensions from the first vertical portion 409a and the second vertical portion 409b.

The stator is positioned in rear of the first extension 406a and the second extension 406b on an inner side of the first vertical portion 409a and the second vertical portion 409b in a radial direction. The rotor which is connected to the rotational shaft 351 also is positioned on the inner side of the first vertical portion 409a and the second vertical portion 409b. That is, on the inner side space defined by the first vertical portion 409a and the second vertical portion 409b, the rotor and the stator are positioned in rear of the first extension 406a and the second extension 406b.

The first extension 406a and the second extension 406b have fastening holes 407 formed therein for fastening the tub back 130, respectively.

There are tub back seating portions 414 formed on fronts of the first vertical portion 409a and the second vertical portion 409b for seating the tub back 130 thereto, respectively. To do this, the first vertical portion 409a and the second vertical portion 409b have stepped portions, respectively. In detail, the seating portion 134 which is an extension from the rim portion 132 of the tub back 130 seats on the tub back seating portion 414.

The first extension 406a, the first vertical portion 409a, and the first weight fastening portion 401a are symmetry with the second extension 406b, the second vertical portion 409b, and the second weight fastening portion 401b, respectively.

The first weight fastening portion 401a has a ground portion 413a for grounding the stator, and a cable bracket 413b for securing a cable thereto formed thereon. The cable can be secured to the cable bracket 413b with a cable tie.

Between the first extension 406a and the second extension 406b, there is a third extension 408. And, there is a third vertical portion 408a which is a backward vertical extension from the third extension 408. The third vertical portion 408a has a third axial bracket 408b which is an extension from the third vertical portion 408a for connecting the third spring damper 500 thereto.

There is a fourth extension 412 which is a radial upward extension from the stator fastening portion 402. The fourth extension 412 has a transit bolt fastening portion 412a having a fastening boss 412b for fastening a transit bolt thereto.

It is described that the inner side radial space of the first vertical portion 409a and the second vertical portion 409b is defined as a space for placing the motor therein. In this instance, on an outer side of the first vertical portion 409a and the second vertical portion 409b, there is the corrugated portion 252 of the rear gasket 250.

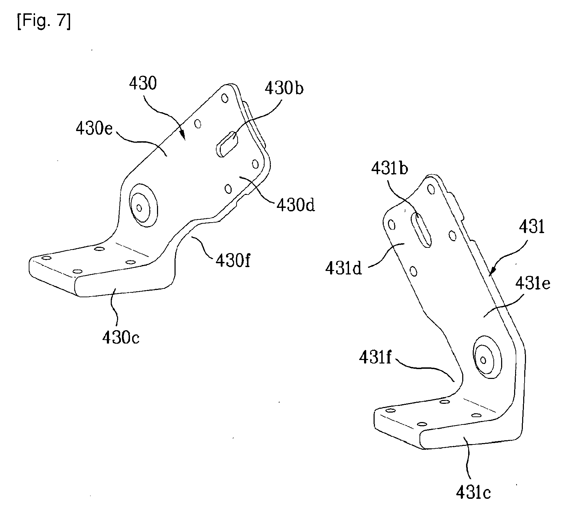

FIG. 7 illustrates the weights. The first weight 421 is connected to the first weight fastening portion 410a, and the second weight 430 is connected to the second weight fastening portion 410b. The first weight 431 and the second weight 430 are symmetry to each other.

The first weight 431 and the second weight 430 serve as weights as well as connector for connecting a first axial bracket 450 and a second axial bracket 440 to be described later to the bearing housing 400, respectively. That is, the first weight 431 and the second weight 430 serve as brackets, and in another embodiment, can be made to perform the services as a weight and a bracket separately. In this instance, with regard to the service as a bracket, the first weight 431 and the second weight 430 can be called as radial brackets taking the fact that the first weight 431 and the second weight 430 are radial extensions with reference to the rotational shaft.

The weights serve to reduce significant sagging of a front end of the drum when the laundry is positioned on a front side of the drum, and also serve as a mass in a vibration system in which the drum vibrates.

Each of the first weight 431 and the second weight 430 has a shape which has radial extension centered on the rotational shaft 351 with a front extension from the radial extension. Each of the weights has four fastening holes on an upper side for fastening to the weight fastening portion.

At a center of the fastening holes, there is a positioning hole 430b or 431b for placing a positioning projection formed at each of the weight fastening portions therein.

The first weight 431 has a first transit bolt portion 431a for fastening a transit bolt thereto, and the second weight 430 has a second transit bolt portion 430a for fastening a transit bolt thereto.

The first weight 431 and the second weight 430 have bracket connection portions 430c and 431c formed thereon for connection to the first axial bracket 450 and the second axial bracket 440, respectively. The bracket connection portions have weights heavier than other portions, respectively.

The first weight 431 and the second weight 430 may be casted.

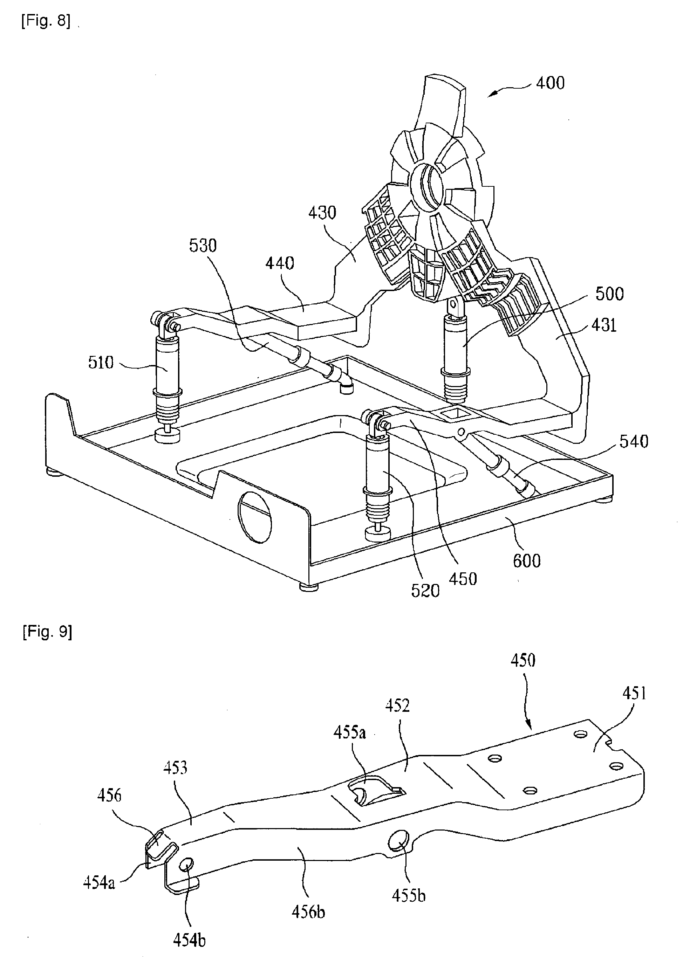

FIG. 8 illustrates the suspension assembly connected to the bearing housing 400 mounted on the base 600.

The suspension assembly may include vertical suspensions for buffering in a vertical direction and front/rear direction suspensions for front/rear direction buffering. The vertical suspensions can be arranged such that one suspension is arranged on a rear side, and two suspensions are arranged on left/right sides on a front side of a center of the base. The front/rear direction suspensions are arranged such that two thereof are arranged in the front/rear direction on left/right sides in a tilted position.

Referring to FIG. 8, the suspension assembly may include a first spring damper 520, a second spring damper 510, a third spring damper 500, a first simple damper 540, and a second simple damper 530.

The spring damper may have a mode in which a spring is mounted between a cylinder and a piston. Since the spring damper is a combination of a cylinder and a piston, the spring damper varies a length thereof securely at the time of buffering. The cylinder is connected to the axial bracket and the piston is connected to a base side.

The simple damper has a structure in which the piston moves in the cylinder to provide a damping effect owing to friction resistance.

The first cylinder spring damper 520 is connected between the first axial bracket 450 and the base 600. And, the second cylinder spring damper 510 is connected between the second axial bracket 440 and the base 600.

The third cylinder spring damper 500 is connected between the bearing housing 400 and the base 600, directly.

It is in a mode that the spring dampers supportably buffer an assembly of the drum and driving unit at one place in a rear, and two on left/right sides of a front side. The three spring dampers support the assembly of the drum and driving unit enough to maintain at least a mounted state even if there is no other supporting means. That is, the three spring dampers can support the assembly of the drum and driving unit to stand by itself.

Both the first spring damper and the second spring damper have the same spring constant. However, the third spring damper 500 has different spring constant. The third spring damper 500 can be identical to the first or second spring damper 510 in view of structure and shape except the spring constant. Therefore, if the spring is changed, they are interchangeable.

The first simple damper 540 is mounted tilted between the first axial bracket 450 and a rear side the base, and the second simple damper 530 is mounted tilted between the second axial bracket 440 and the rear side the base.

The third spring damper 500 is arranged at a center of a rear side, and the first spring damper 520 and the second spring damper 510 are arranged on left/right sides of a front side. And, the first simple damper 540 and the second simple damper 530 are positioned in a space between a spot in rear of the third spring damper 500 and a spot in front of the first spring damper 520 and the second spring damper 510 in symmetry in left/right directions.

The spring dampers may be connected to the base 600 with rubber bushings disposed therebetween.

In the meantime, the spring dampers may be fabricated to exert spring force only, or both the spring force and the damping force. Different from the embodiment, the simple dampers may also have springs respectively mounted thereto for exerting the spring force, too.

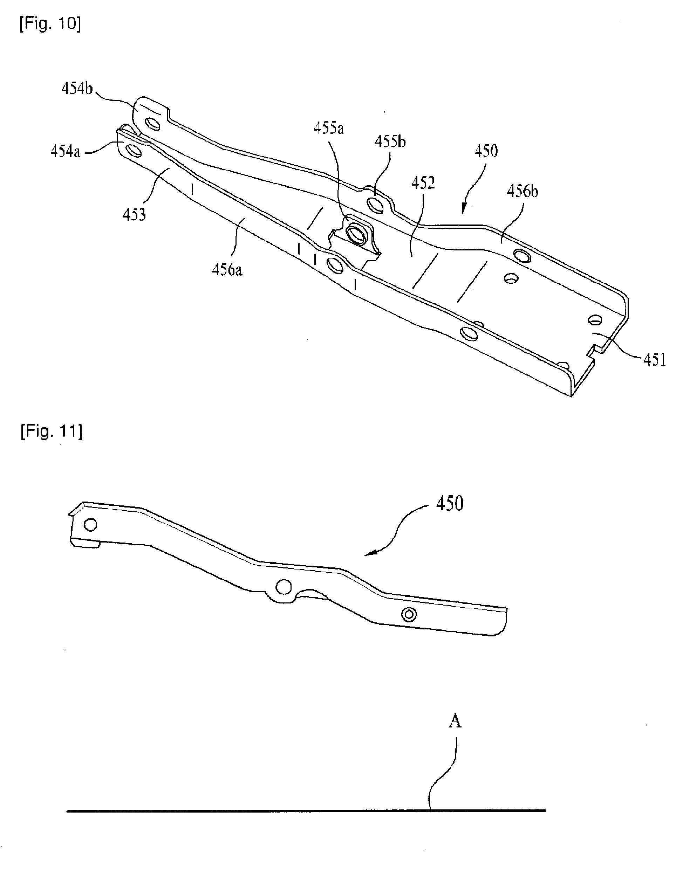

FIGS. 9 and 10 illustrate the first axial brackets 450, respectively. The second axial bracket 440 has shape symmetry to the first axial bracket 450.

The first axial bracket 450 is constructed of a shaped channel. That is, the first axial bracket 450 has the shape including vertically bent walls 456a and 456b from left/right sides of a top surface thereof. The first axial bracket 450 has a left/right direction width which becomes the smaller as the first axial bracket 450 goes from a front thereof to a rear thereof the more.

The first axial bracket 450 has four fastening holes for connection to the first weight 431. After seating the first axial bracket 450 on the first weight 431, the first axial bracket 450 is fastened with bolts.

The first axial bracket 450 has stair shape having three steps. That is, the first axial bracket 450 includes a first stage portion 451 on a rear side, a second stage portion 452 in front of the first stage portion 451, and a third stage portion 453 at foremost position. The first axial bracket 450 has a height which becomes the higher as the first axial bracket 450 goes from the first stage portion 451 to the third stage portion 453, the more.

The first stage portion 451 has the first weight 431 connected thereto, the second stage portion 452 is a portion connected to the first simple damper 540 with a hinge, and the third stage portion 453 is a portion connected to the first sp[ring damper 520 with a hinge.

The second stage portion 452 has a portion of the top surface of the second stage 452 incised and bent vertically for supporting the first simple damper 540. The first simple damper 540 is connected with a hinge in a space between the vertical bent portion 455a formed thus at the top surface of the second stage and the side wall of the first axial bracket 450. Of course, the first simple damper 540 may be connected with a hinge in a space between the left/right side walls of the first axial bracket 450 without forming the vertical bent portion 455a.

In more detail, referring to FIG. 10, there are pass through holes in the side walls 456a and 456b and the vertical bent portion 455a which are aligned with each other. The connection portion for connecting the first cylinder damper 540 is arranged in a space between the vertical bent portion 455a and the left side wall 456b or the right side wall 456a. The left side wall 456b has a downward extension 455b for forming the pass through hole.

As a fastening member, such as a hinge pin or a bolt, is passed through the pass through holes in the left side wall 456b or the right side wall 456a and the vertical bent portion 455a and the pass through hole in the first simple damper 540, the fastening member connects the first simple damper 540 to the first axial bracket 450. In this instance, the connection is a hinge connection which enables rotation around a left/ right direction axis. In order to make such connection, though the connection can be made between one of the left side wall 456b and the right side wall 456a and the vertical bent portion 455a, the fastening member may connect all of the left/right side walls 456a and 456b and the vertical bent portion 455a in connection of the first cylinder damper 540 for enhancing strength or rigidity of the fastening portion. Particularly, rigidity against left/right direction rotational moment of the first axial bracket 450 can be enhanced further.

The first spring damper 520 is connected with a hinge between the side walls 454a and 454b at the third stage portion 453.

A fastening direction of the hinge bolt for connecting the first simple damper 540 and the first spring damper 520 with a hinge is a left/right direction. In a case of the first simple damper 540 and the first spring damper 520, the hinge bolt 541 is fastened in a direction the hinge bolt 541 is directed toward the drum from an outside of the drum. The first simple damper 540 is connected to the base with a hinge. In this time too, the hinge bolt 542 is fastened in the same direction.

The third stage portion 453 has a downward bent portion at an end thereof. The bent portion 456 prevents a top side of the first spring damper 520 from breaking away in a front direction if the hinge connection of the first spring damper 520 is broken.

FIG. 11 illustrates a side view of the first axial bracket 450. As shown, the first axial bracket 450 is mounted such that the front side thereof is higher than the rear side thereof.

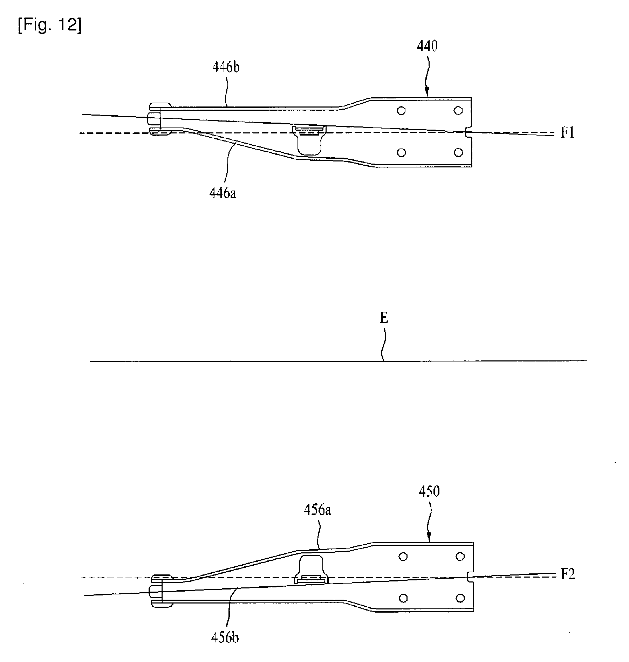

FIG. 12 illustrates a plan view of the first axial bracket 450 and the second axial bracket 440.

If the side walls of the first axial bracket 450 are reviewed typically, it can be known that the inner wall 456a becomes the closer to the outer wall as the first axial bracket 450 goes from a rear side to a front side the more. In this instance, since an outside surface of the tub is cylindrical substantially, the tub has a structure in which the left/ right direction width of the tub becomes the greater as the tub goes from a bottom side toward upward the more. That is, it may be said that, the more you go upward, the outside surface of the tub come closer the more to the axial bracket. Therefore, in a case of the first axial bracket 450, since the inner wall 456a becomes the higher as the first axial bracket 450 goes to a front side thereof the more, the first axial bracket 450 is modified such that the inner wall 456a come closer to the outer wall 456b for maintaining a proper gap to the outside surface of the tub.

It was described that the first spring damper 520, the second spring damper 510 and the third spring damper 500 are identical except the spring constant. That is, the spring dampers have the same lengths. However, connection points of the first spring damper 520 and the second spring damper 510 respectively to the first axial bracket 450 and the second axial bracket 440 are lower than the connection point of the third spring damper 500 to the third axial bracket 408b. Therefore, in order to use the spring dampers of the same lengths, a portion of the base where the third spring damper 500 is to be fastened may be formed higher relatively. That is, such a height difference is provided for securing interchangeability of the spring dampers.

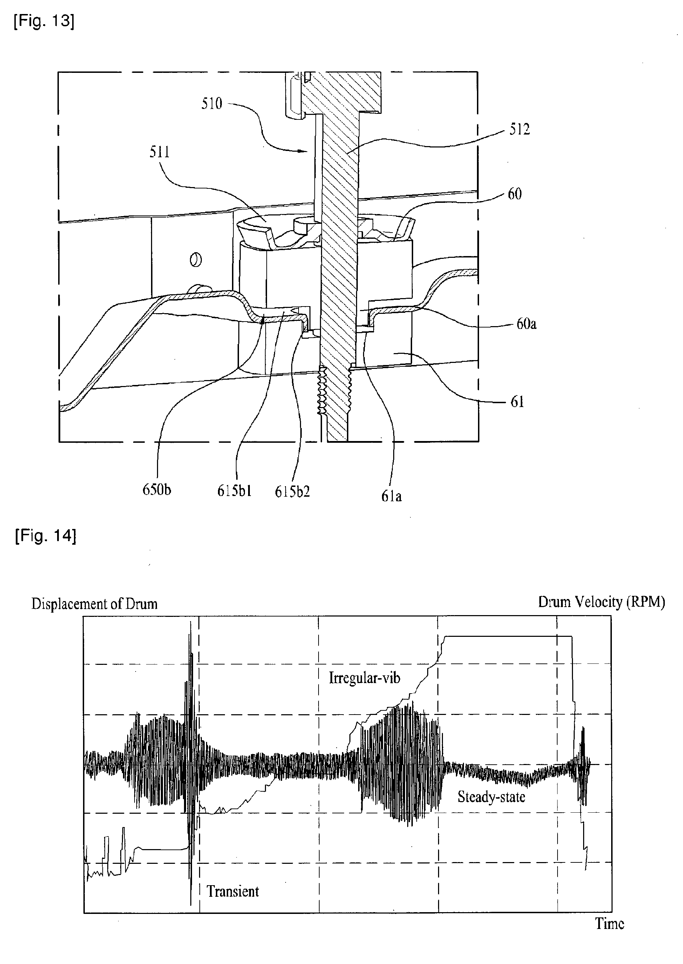

FIG. 13 illustrates a partial section showing the second spring damper 510 mounted to the base 600. Methods for mounting other spring dampers to the base 600 are the same.

Referring to FIG. 13, a supporting portion 605b of the base 600 has a bushing seating portion 605b1 formed by pressing a portion of the supporting portion 605b downward. The bushing seating portion 605b1 has a pass through hole in a center thereof having a cylindrical portion 605b2 formed as an edge portion of the pass through hole is bent downward, vertically.

The bushing seating portion 605b1 has a top surface having an upper rubber bushing 60 seated thereon and an underside having a lower rubber bushing 61 seated thereon. The upper rubber bushing 60 has a pass through hole at a center for placing a piston 512 therethrough. The pass through hole has a lower portion 60a projected downward and placed in the cylindrical portion 605b2 in the center of the bushing seating portion 605b1. The lower rubber bushing 61 also has the piston 512 placed therethrough. The lower rubber bushing 61 has a cylindrical hole 61a for receiving the cylindrical portion 605b2 of the bushing seating portion 605b1.

Referring to FIG. 3, in a state the piston 512, the upper rubber bushing 60, and the lower rubber bushing 61 are coupled, a nut is fastened to the piston 512. Thus, the second spring damper 510 is fastened to the base with the rubber bushing disposed therebetween. According to this, the second spring damper 510 can make movement relative to the base within a limit elasticity of the rubber bushing allows the movement.

By fastening the spring damper to the base with the rubber bushing disposed therebetween, a certain extent of freedom is allowed to the spring damper, particularly, rotational freedom to the base is allowed to the spring damper.

In the meantime, both the upper rubber bushing 60 and the lower rubber bushing 61 have an outside diameter of 40mm, and the upper rubber bushing 60 has thickness of 11. 5mm before mounting the upper rubber bushing 60, and the lower rubber bushing 61 has thickness of 12. 5mm before mounting the lower rubber bushing 61. Even though the rubber bushings have thicknesses different from each other before mounting the rubber bushings, the two rubber bushings are mounted to have the same thicknesses in a state the rubber bushings are mounted. That is, at the time the nut is fastened to a lower end of the piston 512 for mounting the rubber bushing, the nut is fastened until thicknesses of the rubber bushings 60 and 61 become the same. The rubber bushings, which support rotational moment acting on the spring damper, can reduce vibration of the drum by mounting the rubber bushings thus. The upper rubber bushing 60 and the upper rubber bushing 61 can be formed of Isobutylene-Isoprene rubber, with hardness in a range of 55 - 65Hs, and 60Hs at a room temperature. The upper rubber bushing 60 and the lower rubber bushing 61 can increase front/rear direction or left/right direction amplitude of the vibration if the upper rubber bushing 60 and the lower rubber bushing 61 have excessively low rigidity, and can cause abnormal vibration in a steady state at the time of spinning as described later if the upper rubber bushing 60 and the lower rubber bushing 61 have excessively high rigidity.

In the meantime, spring constant or spring force of the spring damper 500, 510 and 520 will be reviewed in more detail.

Against a center of gravity of an assembly having a drum assembly (an assembly of the drum, the rotational shaft, the bearing housing, and the motor), the weights 430 and 431 and the axial brackets 440 and 450, the first spring damper 520 and the second spring damper 510 are mounted on a front side, and the third spring damper 500 is mounted on a rear side. In this instance, a front/rear direction distance from the center of gravity to the first and second spring damper 510 and 520 can be greater than a front/rear direction distance from the center of gravity to the third spring damper 500. The assembly of the drum assembly and so on is an object the dampers are required to buffer and support. Therefore, depending on embodiments, the assembly may vary. Such an assembly may be called as an oscillating body assembly collectively in a view that the vibration of the assembly is buffered by the dampers. Or, with reference to a center of gravity of an assembly of the drum and driving unit, determination may be made as above. The driving unit includes the rotational shaft, the bearing housing, and the motor.

In this state, there can be a requirement for designing the spring force of the third spring damper greater for maintaining balance of the drum assembly centered on the center of gravity.

If the distances from the center of gravity to the first and second spring dampers 510 and 520 and to the third spring damper 500 are the same, it may be designed that a sum of the spring force of the first and second spring dampers 510 and 520 will be the same with the spring force of the third spring damper 500.

However, the distance from the center of gravity to the third spring damper 500 is shorter than the distance from the center of gravity to the first and second spring dampers 510 and 520, in order to make moment balance of the center of gravity, it may be required that the spring force of the third spring damper 500 is more than two times of the sum of the spring force of the first and second spring dampers 510 and 520.

In this instance, to cause the spring forces different, the spring constant may be made different. For an example, the spring constant of the third spring damper 500 may be set to be higher than the first or second spring damper 510 or 520. However, if the spring constant of the third spring damper 500 is higher than the first or second spring damper 510 or 520, if it is assumed that the front side and the rear side move in the same translocations, since a change of the spring force of the third spring damper 500 that serves to push the drum upward at the rear side becomes greater than the spring force of the first and second spring dampers 510 and 520, causing a fore end of the drum to make a great downward translocation, the fore end of the drum makes a great downward translocation, causing the front side of the drum shakes in up/down directions, significantly. In order to prevent such a problem from taking place, another spring damper may be required.

Moreover, it is necessary to prevent the front side of the drum from sagging down significantly in a case the drum is moving forward at the time the laundry is introduced to the drum, or the laundry moves within the drum, it may be favorable that the spring constant of the first spring damper 520 and the second spring damper 510 is greater than the spring constant of the third spring damper 500 at the rear side. The spring constant of the spring dampers 500, 510 and 520 may be determined such that the front side translocates downward more than the rear side if the laundry is introduced to the drum for reducing an initial tilting angle. The spring constant of the spring dampers 500, 510 and 520 may be determined, taking such a situation into account, the spring constant of the first spring damper 520 and the spring constant of the second spring damper 510 can be 7000~8600 N/m respectively, and the spring constant of the third spring damper 500 can be 4500~5500 N/m. In this embodiment, the spring constant of the second spring damper 510 is 7800 N/m respectively, and the spring constant of the third spring damper 500 is 5000 N/m

In this instance, in order to make the third spring damper 500 to exert spring force greater than the first spring damper 520 and the second spring damper 510 at the front side, the spring may be compressed for making initial translocation of the spring at the time of mounting the spring damper. The spring dampers 500, 510 and 520 are compressed for certain distances after the spring dampers 500, 510 and 520 are mounted due to weights of the spring dampers 500, 510 and 520 respectively. In this instance, the third spring damper 500 is mounted such that the compressed length of the spring is greater than the compressed lengths of the spring constant and the second spring damper 510, respectively. That is, while the spring constant of the third spring damper 500 is made lower than the spring constant of the first spring damper 520 and the second spring damper 510, the spring of the third spring damper 500 is compressed more in mounting for securing required spring force, thereby securing stability of the system.

In the meantime, it is described that the spring dampers 500, 510 and 520 can be made to exert attenuation force (or damping force) respectively. The attenuation force may be set to be 35-45 N/m. It may be 40 N/m. It is preferred that the attenuation force is set to be below 60 N/m. If the attenuation force is higher than that, the vibration of the drum can become instable abnormally at the time of spinning. For an example, the ball balancers at the front side or/and the rear side of the drum fail to serve as balancer in a state the rotation speed of the drum exceeds 400 rpm, causing an unbalanced amount (UB amount) to become great such that diverging of a vibration system can also take place. Even though the related art laundry machine has large mass of the vibration system as the related art laundry machine has a vibration system in which the tub and the drum vibrate together, it may be said that the laundry machine of the present invention has small mass of the vibration system. If the attenuation force is great in a state the mass of the vibration system becomes light, since the vibration can become instable, it is required to restrict the attenuation force.

In order to reduce a front/rear direction translocation amount of the drum, the first simple damper 540 and the second simple damper 530 are mounted tilted, wherein the simple dampers 530 and 540 may be set to have the attenuation force of 40 N/m, respectively. Under the same reason, it may be favorable that the simple dampers 530 and 540 may be set to have the attenuation force below 70-90 N/m(in this embodiment, 80N/m), respectively. The first simple damper 540 and the second simple damper 530 are mounted, each with a front side thereof tilted at 35 degrees to a horizontal plane. Since the laundry machine of the present invention can reduce transmission of the vibration from the drum to the tub substantially, the tub can be enlarged close to the cabinet, enabling to enlarge the volume of the drum resulting to increase capacity of the drum. In this instance, it can be said that external force come from the rotation of the drum becomes greater. And, though it may be said that the tub serves to prevent the front/rear direction vibration of the drum from taking place in the related art, since the laundry machine of the present invention is not so, it is favorable that the mounting of the tilted simple dampers 530 and 540 is favorable for reducing the front/rear direction translocation of the drum.

The sum of the attenuation force of the spring dampers 500, 510 and 520 and a sum of the up/down direction components (40 N/m x sin 35 degrees) of the attenuation force of the first and second simple dampers 530 and 540 acts on the up/down direction vibration of the drum assembly. And, a sum of the front/rear direction components (40 N/m x cos 35 degrees) of the attenuation force of the first and second simple dampers 530 and 540 acts on the front/rear direction vibration of the drum assembly.

In order to reduce the abnormal vibration instability as described above, it is favorable that the up/down direction attenuation force is restricted to be below (3 x 60 + 2 x 80 sin35 degrees) N/m, and the front/rear direction attenuation force is restricted to be below (3 x 80 cos35 degrees) N/m.

In the meantime, the rear gasket serve to connect the drum assembly to the tub, wherein, since the rear gasket 250 also has spring constant, the rear gasket 250 acts as a spring on the drum assembly in view of a vibration system. Though it is preferable that the rear gasket 250 does not exert the spring force as far as possible, it is inevitable that the rear gasket 250 has a certain extent of rigidity owing to reasons that the rear gasket 250 is required to maintain a shape thereof and endure a pressure of the washing water. However, even such cases are taken into account, it is preferable that the spring constant of the rear gasket 250 does not exceed 8000N/m. If the spring constant of the rear gasket 250 exceeds 8000N/m, a problem is liable to cause in the steady state region at a rotation speed of the drum higher than 400. In the embodiment, the spring constant of the rear gasket 250 is 6000N/m. A transient vibration region can take place, in which amplitude of the vibration becomes great due to resonance as the rotation speed of the drum increases at the time of spinning. And, once the transient vibration region is passed, the vibration arrives to a steady state region in which the amplitude of the vibration drops to a comparatively low fixed level.

In the meantime, despite of the name of the rear gasket, the rear gasket can be formed of various materials. In general, other than materials which are used for formation of a gasket, if a gasket can be formed of a material that can reduce a rate of vibration transmission from the drum to the tub, the material can also be utilized. Along with this, if a shape of the rear gasket can comparatively minimize the vibration transmission from the drum to the tub, a design of the rear gasket can be modified to have the shape.

Along with this, it may be said that the spring dampers and the simple dampers may be variations of the suspensions which buffer and support the drum assembly. Despite of the names, the spring dampers and the simple dampers may have other shapes other than the cylindrical shape.

In the meantime, a vibration characteristic of the laundry machine of the present invention will be reviewed with reference to FIG. 14. At first, as the rotation speed of the drum increases, a region (a transient vibration region) appears, in which transient vibration having great and irregular amplitude takes place. The transient vibration region is a vibration region having irregular and great amplitude before the vibration becomes comparatively steady (steady state vibration), which is in general a vibration characteristic which is fixed as a vibration system (the laundry machine) is designed. The laundry machine of the embodiment shows the transient vibration at about 200 ∼ 350rpm, which is considered to be transient vibration caused by resonance. Moreover, the laundry machine of the present invention shows cases when a region (called as "irregular vibration") takes place in which the vibration becomes greater again while the vibration becomes steady after the vibration passes the transient vibration region. As the result of the study, the irregular vibration takes place at about 400 - 1000rpm region (called as an "irregular vibration region"). It is understood that the balancers, the buffering and supporting means (damping system), the rear gasket 250 and so on affect to the irregular vibration.

It is required to understand that names used for elements of the present invention are not interpreted limited to meaning in a dictionary or technical meaning. At least some of the names of the elements may include names given for convenience's sake, but not limit a material, a function, or a shape of the element. It is required that the elements of the present invention are defined and interpreted by functions and services of the elements.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

### Industrial Applicability

The present invention relates to a laundry machine. The present invention provides a laundry machine in which a structure of a suspension assembly which supportably buffers vibration of a drum is completely different from a related art structure. In the laundry machine in accordance with a preferred embodiment of the present invention, the suspension assembly which buffers the vibration of the drum can include at least three suspensions arranged on a triangle.

## Claims

1. A laundry machine comprising:
a tub to hold water therein;
a drum in which laundry is to be placed;
a drive assembly including a shaft (351) connected to the drum, a bearing housing (400) to rotatably support the shaft (351), and a motor to rotate the shaft (351);
a suspension assembly including at least two suspension units, wherein a front unit is arranged in front of a rear unit, and the front unit is located on a front side of a gravity center of an assembly of the drum and the drive assembly, and the rear unit is located on a rear side of the gravity center;
wherein a net spring constant of the front unit is greater than a net spring constant of the rear unit, and **characterised in that** the suspension assembly is attached to the bearing housing (400) to reduce vibration of the drum and the launding machine further comprising a rear gasket (250) to prevent the water inside the tub from leaking toward the drive assembly and allow the drive assembly to move relatively to the tub.

2. The laundry machine as claimed in claim 1, wherein the front unit includes two spring dampers (520, 510) and the rear unit include only one spring damper ( 500).

3. The laundry machine as claimed in claim 1, wherein the front net spring constant greater than twice of the rear net spring constant, wherein the front net spring constant is equal to or greater than 14000N/m and the rear net spring constant is equal to or smaller than 6000N/m.

4. The laundry machine as claimed in claim 1, wherein the front unit includes two suspensions arranged left and right sides with respect to a rotational axis of the drum, and (520, 510) the rear unit includes one suspension (500) arranged offset from the middle of the two suspensions along the rotational axis.

5. The laundry machine as claimed in claim 4, wherein the three suspensions are spring dampers (520, 510, 500), wherein respective spring constants of the front two suspensions are greater than a spring constant of the rear suspension.

6. The laundry machine as claimed in claim 4, wherein the respective spring constants of the front two suspensions (520, 510) are 7000~8600N/m, and the spring constant of the rear suspension (500) is 4500~5500N/m.

7. The laundry machine as claimed in claim 6, wherein the flexible material having a spring constant of 6000N/m or smaller with respect to a displacement of the drive assembly in an up-and-down direction.

8. The laundry machine as claimed in claim 1, wherein the suspension assembly further comprises a damping unit, and the damping unit includes two simple dampers (530, 540) arranged left and right sides with respect to the rotational axis of the drum.

9. The laundry machine as claimed in claim 1, wherein the rear unit is compressed more than the front unit is when they are initially installed.

## Patentansprüche

1. Waschmaschine, die umfasst:
einen Bottich, um Wasser darin zu halten;
eine Trommel, in die Wäsche zu legen ist;
eine Antriebsanordnung, die eine Welle (351), die mit der Trommel verbunden ist, ein Lagergehäuse (400), um die Welle (351) drehbar zu tragen, und einen Motor, um die Welle (351) zu drehen, enthält;
eine Aufhängungsanordnung, die mindestens zwei Aufhängungseinheiten enthält, wobei eine vordere Einheit vor einer hinteren Einheit angeordnet ist und sich die vordere Einheit auf einer Vorderseite eines Schwerpunkts einer Anordnung der Trommel und der Antriebsanordnung befindet und sich die hintere Einheit auf einer Hinterseite des Schwerpunkts befindet;
wobei eine Nettofederkonstante der vorderen Einheit größer als eine Nettofederkonstante der hinteren Einheit ist, **dadurch gekennzeichnet, dass** die Aufhängungsanordnung an dem Lagergehäuse (400) befestigt ist, um Schwingungen der Trommel zu verringern; und
wobei die Waschmaschine ferner eine hintere Abdichtung (250) umfasst, um zu verhindern, dass Wasser innerhalb des Bottichs in Richtung der Antriebsanordnung leckt, und der Antriebsanordnung zu ermöglichen, sich relativ zu dem Bottich zu bewegen.

2. Waschmaschine nach Anspruch 1, wobei die vordere Einheit zwei Federungsdämpfer (520, 510) enthält und die hintere Einheit nur einen Federungsdämpfer (500) enthält.

3. Waschmaschine nach Anspruch 1, wobei die vordere Nettofederkonstante größer als die doppelte hintere Nettofederkonstante ist, wobei die vordere Nettofederkonstante gleich oder größer als 14000 N/m ist und die hintere Nettofederkonstante gleich oder kleiner als 6000 N/m ist.

4. Waschmaschine nach Anspruch 1, wobei die vordere Einheit zwei Aufhängungen (520, 510) enthält, die links- und rechtsseitig in Bezug auf eine Drehachse der Trommel angeordnet sind, und
die hintere Einheit eine Aufhängung (500) enthält, die von der Mitte der beiden Aufhängungen entlang der Drehachse versetzt angeordnet ist.

5. Waschmaschine nach Anspruch 4, wobei die drei Aufhängungen Federungsdämpfer (520, 510, 500) sind, wobei jeweilige Federkonstanten der vorderen beiden Aufhängungen größer als eine Federkonstante der hinteren Aufhängung ist.

6. Waschmaschine nach Anspruch 4, wobei die jeweilige Federkonstante der beiden vorderen Aufhängungen (520, 510) 7000-8600 N/m beträgt und die Federkonstante der hinteren Aufhängung (500) 4500-5500 N/m beträgt.

7. Waschmaschine nach Anspruch 6, wobei das flexible Material eine Federkonstante von 6000 N/m oder weniger in Bezug auf eine Verschiebung der Antriebsanordnung in einer Aufwärts/Abwärts-Richtung besitzt.

8. Waschmaschine nach Anspruch 1, wobei die Aufhängungsanordnung ferner eine Dämpfungseinheit enthält und die Dämpfungseinheit zwei einfache Dämpfer (530, 540) umfasst, die links- und rechtsseitig in Bezug auf die Drehachse der Trommel angeordnet sind.

9. Waschmaschine nach Anspruch 1, wobei die hintere Einheit mehr als die vordere Einheit komprimiert ist, wenn sie anfänglich installiert sind.

## Revendications

1. Machine à laver, comprenant :
une cuve pour contenir de l'eau à l'intérieur ;
un tambour dans lequel il s'agit de placer du linge à laver ;
un ensemble d'entraînement incluant un arbre (351) connecté au tambour, un boîtier de palier (400) pour supporter l'arbre (351) en rotation, et un moteur pour faire tourner l'arbre (351) ;
un assemblage de suspension incluant au moins deux unités de suspension, dans lesquels une unité avant est agencée en avant d'une unité arrière, et l'unité avant est situé sur un côté avant d'un centre de gravité d'un ensemble formé du tambour et de l'ensemble d'entraînement, et l'unité arrière est située sur un côté arrière du centre de gravité ;
dans laquelle une constante élastique net de l'unité avant est plus élevée qu'une constante élastique net de l'unité arrière, et **caractérisée en ce que** l'assemblage de suspension est attaché au boîtier de palier (400) pour réduire les vibrations du tambour, et **en ce que** la machine à laver comprend en outre un joint arrière (250) pour empêcher à l'eau à l'intérieur de la cuve de fuir vers l'ensemble d'entraînement et permettre à l'ensemble d'entraînement de se déplacer par rapport à la cuve.

2. Machine à laver selon la revendication 1, dans laquelle l'unité avant inclut deux amortisseurs à ressort (520, 510), et l'unité arrière inclut un seul amortisseur à ressort (500).

3. Machine à laver selon la revendication 1, dans laquelle la constante élastique net de l'unité avant est supérieure à deux fois la constante élastique net de l'unité arrière, et dans laquelle la constante élastique net de l'unité avant est égale ou supérieure à 14 000 N/m, et la constante élastique net arrière est égale ou inférieure à 6000 N/m.

4. Machine à laver selon la revendication 1, dans laquelle l'unité avant inclut deux suspensions (510, 520) agencées sur le côté gauche et sur le côté droit par rapport à l'axe de rotation du tambour, et l'unité arrière inclut une suspension (500) agencée décalée depuis le milieu des deux suspensions le long de l'axe de rotation.

5. Machine à laver selon la revendication 4, dans laquelle les trois suspensions sont des amortisseurs à ressort (520, 510, 500), dans lesquelles les constantes élastiques respectives des deux suspensions avant son plus élevées que la constante élastique de la suspension arrière.

6. Machine à laver selon la revendication 4, dans laquelle les constantes élastiques respectives des deux suspensions avant (520, 510) sont de 7000 à 8600 N/m, et la constante élastique de la suspension arrière (500) est de 4500 à 5500 N/m.

7. Machine à laver selon la revendication 6, dans laquelle le matériau flexible a une constante élastique de 6000 N/m ou inférieure par rapport à un déplacement de l'ensemble d'entraînement dans une direction vers le haut/vers le bas.

8. Machine à laver selon la revendication 1, dans laquelle l'assemblage de suspension comprend en outre une unité d'amortissement, et l'unité d'amortissement inclut deux amortisseurs simples (530, 540) agencés du côté gauche et du côté droit par rapport à l'axe de rotation du tambour.

9. Machine à laver selon la revendication 1, dans laquelle l'unité arrière est comprimée plus fort que l'unité avant quand elles sont initialement installées.
